# EUROPEAN PATENT SPECIFICATION

(11) **EP 2 045 810 B1**
(45) Date of publication and mention of the grant of the patent: **06.12.2017**
(21) Application number: 07253893.7
(22) Date of filing: 01.10.2007
(51) Int. Cl.: G11B 27/10, H04L 29/06

(54) **SYNCHRONISATION OF MEDIA OPERATIONS ON MULTIPLE DEVICES**
SYNCHRONISATION VON MEDIENOPERATIONEN AUF MEHREREN VORRICHTUNGEN
SYNCHRONISATION D'OPÉRATIONS DE MÉDIA SUR PLUSIEURS DISPOSITIFS

(43) Date of publication of application: 08.04.2009
(73) Proprietor: TTPCOM Limited, Royston, Hertfordshire, SG8 6HQ (GB)
(72) Inventor: Kerry, Nicholas, Burwell, Cambridgeshire CB25 0AE (GB)
(74) Representative: Openshaw & Co.

(56) References cited:
- EP-A- 0 598 499
- US-A1- 2004 044 532
- US-A1- 2006 104 616
- US-B1- 6 941 383

## Description

Mobile communications devices such as mobile telephones are constantly evolving to meet the changing demands of consumers. Many mobile telephones are provided with digital cameras, enabling them to capture still and moving images, microphones for sound recording and media player software for displaying or playing image and sound files. A large amount of internal or removable memory is typically provided to permit storage of such media files. For example, a user of a mobile telephone may be able to store several songs on the telephone as mp3 music files, whilst images such as photographs taken using a built-in camera of the telephone may be stored in jpeg format, and video (moving images) taken using the camera may be stored as mp4 files.
As well as the ability to capture and play media such as video and sound files, many mobile telephones are able to connect to the internet, allowing a user to download media for playback using the capabilities of the telephone.
These capabilities of mobile communications devices allow network operators, broadcasters and other organisations to offer media to subscribers and users of mobile communications devices, providing an improved user experience and offering additional revenue streams. EP0598499 relates to a system and method for synchronising multimedia presentations on a multi-processor computing system by using a common clock to define a synchronisation base point.
WO2005/048584 relates to a method for capturing a target with at least two recorders, in which at least two recorders are controlled via a wireless connection to capture substantially simultaneously one target common for the recorders or several targets separate for the recorders.

The scope of the invention is defined by the appended claims. The invention concerns a method as in claim 1, a system as in claim 10 and a program as in claim 11. According to a first aspect of the invention, there is provided a method of synchronising commencement of a media operation on a device with commencement of a media operation on at least one other device, wherein the device and the at least one other device receive a common timing reference signal which provides a plurality of commencement points, the method comprising commencing the media operation on the devices at a common commencement point after a start command has been received by each device, characterised in that the common timing reference signal is from a source external to the devices.

This method of synchronising the commencement of a media operation allows two or more devices to perform operations simultaneously, allowing users of the devices to share a richer experience.

The common timing reference signal may comprise a frame sequence of a cellular telecommunications system such as GSM, CDMA or UTMS.

The method may further comprise providing an indication of the common timing reference signal on the device.

The indication may comprise a visual indication.

The visual indication may comprise changing the colour of an LED of the device in synchronisation with the common timing reference signal.

Additionally or alternatively, the visual indication may comprise changing a display of the device in synchronisation with the common timing reference signal.

The indication may comprise an audible indication.

The media operation may comprise playing a media file.

Alternatively, the media operation may comprise making a recording.

According to a second aspect of the invention, there is provided a method of synchronising commencement of a media operation on a plurality of devices, wherein the devices receive a common timing reference signal which provides a plurality of commencement points, the method comprising commencing the media operation on the plurality of devices at a common commencement point after a start command has been received by each of the plurality of devices, characterised in that the common timing reference signal is from a source external to the devices.

According to a third aspect of the invention, there is provided apparatus for performing a media operation, the apparatus comprising: means for receiving a common timing reference signal providing a plurality of commencement points from an external source; means for issuing a start command to the apparatus; and means for commencing the media operation at a commencement point after a start command has been issued to the apparatus.

According to a fourth aspect of the invention, there is provided a program for causing processing means to perform the method of the first aspect of the invention.

Embodiments of the invention will now be described in detail, strictly by way of example only, with reference to the accompanying drawings, of which
Figure 1 is a schematic representation of two mobile telephone handsets being used to display complementary moving images;
Figure 2 is a schematic representation of a sequence of frames of a cellular telecommunications system used as a timing reference signal;
Figure 3 is a schematic representation illustrating the use of a frame number as a commencement point for a media operation; and
Figure 4 is a schematic representation of a method of providing an indication of the timing reference signal.

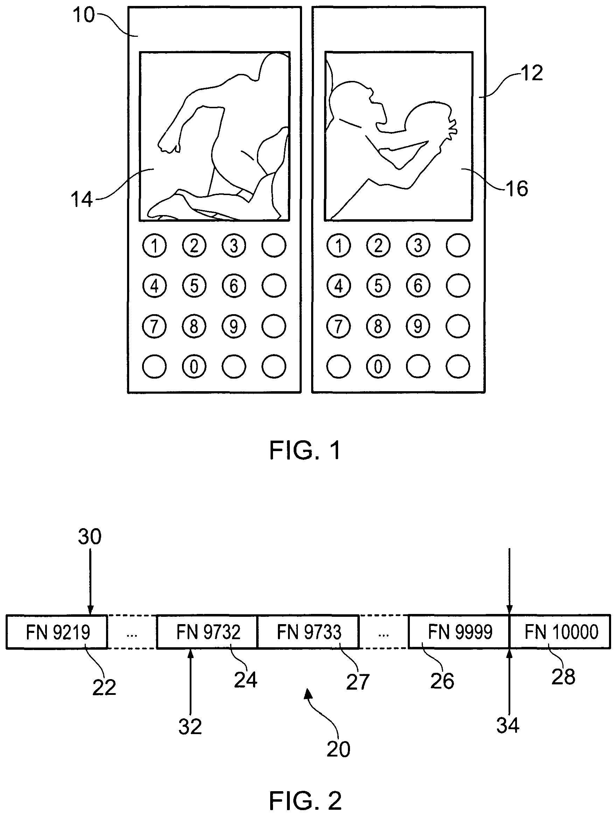

Figure 1 is a schematic representation of two mobile telephone handsets 10, 12 positioned side by side. Displays 14, 16 of the handsets 10, 12 each display a complementary moving image, in this example a moving image of a sporting event, with these moving images being synchronised to give the impression that a single composite moving image is being displayed across the two screens 14, 16. Thus, screen 14 of handset 10 displays a left-hand part of the composite moving image, whilst screen 16 of handset 12 displays a right-hand part of the composite moving image.

For the illusion of a single composite moving image to be sustained, the moving images displayed on screens 14, 16 must be very closely synchronised. In the method of the present invention, this synchronisation is achieved through the use of an external timing reference signal, which is received by both of the handsets 10, 12.

Referring next to Figure 2, a sequence of frames used in a cellular telecommunications system is shown generally at 20. For example, in the GSM cellular telecommunications system, TDMA (Time Division Multiple Access) frames are used to allow a plurality of users (such as handsets 10, 12) to use a frequency channel, with each user being provided with access to the channel for a particular period of time, or slot, within each TDMA frame. Each of these frames is numbered, and the numbering sequence repeats periodically, for example in the GSM system the frame number cycles over 2715648 frames and the cycle repeats approximately every three and a half hours. Thus, in the example shown in Figure 2, a first TDMA frame 22 is numbered 9219, a second, subsequent, frame 24 is numbered 9732 and a third, subsequent, frame 26 is numbered 9999. In a GSM system, each frame is approximately 4.615ms long, and thus a new frame number is generated approximately every 4.6ms.

It will be appreciated that the present invention does not rely on the TDMA frame structure used in the GSM system. Other cellular communications systems such as CDMA and UMTS (W-CDMA) also have a frame structure which can be used as an external timing reference signal.

The frame number of the frame currently in use is found from synchronisation data periodically transmitted by the serving base station of a cellular system, and this can be used as a timing reference signal for synchronising the commencement of a media operation on a plurality of devices.

In the example illustrated in Figure 1, handsets 10 and 12 are positioned adjacent one another, and in the example of a GSM system are served by the same base station. Thus, each handset 10, 12 receives the same frame number from the base station, with this frame number changing periodically, for example approximately every 4.615ms. Correct operation of the GSM system requires that an internal timebase of each of the handsets 10, 12 can be synchronised with the signal received from the base station to an accuracy much better than this frame timing, for example 100 to 1000 times better. A video file containing the left-hand side of a composite moving image is loaded on handset 10, whilst a video file containing the right-hand side of the composite moving image is loaded on handset 12. To display the moving images, a user of each handset 10, 12 initiates playback of the video files by issuing a start command, for example by pressing a play button on each handset 10, 12. However, playback of the moving images does not necessarily commence immediately. Instead, to ensure that the moving images displayed on each screen 14, 16 are correctly synchronised, that is to say synchronised to an acceptable degree of accuracy, playback of the video files is delayed until a common start time, defined by the frame number signal received by each handset 10, 12.

This is illustrated schematically in Figure 2. In this example, a user of handset 10 issues a start command during the first frame 22 (number 9219), as indicated by arrow 30. A user of handset 12 issues a start command during the second frame 24 (number 9732), as indicated by arrow 32. Playback of the video files does not commence, however, until the beginning of a still later frame 28 (number 10000), as indicated by arrow 34. At this point, playback of the video files loaded on handsets 10 and 12 commences simultaneously, ensuring that the two video files are synchronised to a high degree of accuracy, thus maintaining the illusion that a single composite moving image is being displayed across the two screens 14, 16.

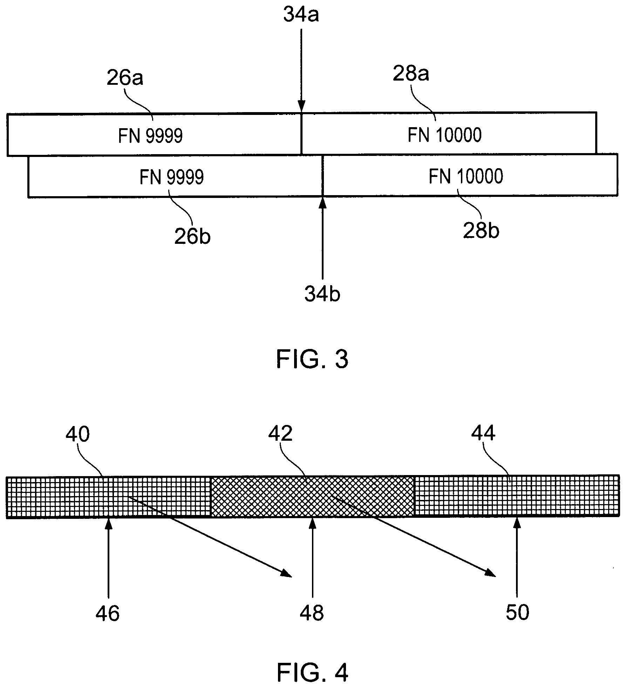

It will be appreciated that playback of the video files loaded on handsets 10 and 12 may not commence exactly simultaneously, as the frame numbers are determined by the handsets 10, 12 with reference to their respective internal timebases, which may not be exactly synchronised. This is illustrated in Figure 3, which shows an enlarged and exaggerated representation of part of the frame sequence, as determined by the handsets 10, 12.

In Figure 3, the uppermost frame sequence 26a, 28a is the frame sequence determined by handset 10 with reference to its internal timebase, whilst the lowermost frame sequence 26b, 28b is the frame sequence determined by handset 12 with reference to its own internal timebase. A slight time offset exists between the two frame sequences 26a, 28a and 26b, 28b, and thus playback of the video file on handset 10, indicated by arrow 34a, commences slightly earlier than playback of the video file on handset 12, as indicated by arrow 34b. However, provided that the time offset between the two frame sequences 26a, 28a and 26b, 28b is sufficiently small, for example below 10ms, the slight difference in the commencement times of the playback on the handsets 10, 12 is not noticeable, and thus the illusion of a single composite moving image being displayed across the two screens 14, 16 is maintained.

In this example, playback of the video files commences only at the beginning of frame numbers which are divisible by 1000. Thus, playback does not commence at the beginning of the frame 27 (which has frame number 9733) after the start commands have been issued by the users of both handsets 10, 12. Instead, playback commences at a commencement point coinciding with the beginning of the later frame 28, which has frame number 10000. Thus, in a system where a frame has a duration of approximately 4.615ms, commencement points only arise approximately every 4.6 seconds. This ensures that there is sufficient time for start commands to be issued to both handsets 10, 12 before a commencement point, thus ensuring correct synchronisation of the video files. Of course, alternative timings are equally suitable. For example, commencement points could coincide with the beginning of frames having frame numbers which are divisible by 500, thus reducing the delay between commencement points.

In the example shown in Figure 2, start commands 30, 32 are issued well before the commencement point 34, and thus playback of the complementary video files on the two handsets 10, 12 is synchronised. It is possible, however, that a commencement point 34 may fall between the issuance of a start command to handset 10 and the issuance of a start command to handset 12, which would lead to playback commencing on handset 10 at a first commencement point, whilst playback on handset 12 commences at a second, later commencement point. To reduce the likelihood of this occurring, users of handsets 10, 12 may be provided with an indication of the common timing reference signal used by the handsets 10, 12 to synchronise commencement of playback, as is illustrated in Figure 3.

In the approach illustrated in Figure 3, time is divided into intervals 40, 42, 44, with each interval being the duration between adjacent commencement points 46, 48, 50. The start of each interval 40, 42, 44 is offset from the respective commencement point 46, 48, 50, for example by half the duration of the interval. Thus, in the example discussed above, each interval 40, 42, 44 has a duration of approximately 4.6 seconds, and the start of each interval 40, 42, 44 is offset from the respective commencement point 46, 48, 50 by approximately 2.3 seconds.

The intervals 40, 42, 44 are indicated by the handsets 10, 12, and as each handset 10, 12 detects the same sequence of frames and frame numbers, each handset 10, 12 indicates the same interval. The intervals may be indicated by an LED which changes colour, for example alternating between red and green with alternate intervals 40, 42, 44. Alternatively, the contents of displays on the screens 14, 16 of the handsets 10, 12 may change in synchronisation with the intervals 40, 42, 44. For example, the displays may alternate between two different background colours or messages with alternate intervals 40, 42, 44. Additionally or alternatively, the indication may be audible. For example, the handsets 10, 12 may play alternate tones during the alternate intervals 40, 42, 44.

The users of the handsets 10, 12 each issue a start command in one of the intervals 40, 42, 44, which are indicated by the handsets 10, 12, and playback of the complementary video files commences at the next commencement point 46, 48, 50 after the end of that interval. Thus, if users issue start commands during interval 40, playback commences at commencement point 48. To further reduce the likelihood of mis-synchronisation, gaps may be provided between the intervals, where no indication is provided to the users, with the placement and length of these gaps being chosen for optimal performance. Users can thus be alerted by the gaps between the intervals and the corresponding lack of indication that an interval in which a start command can be issued is imminent, and can ready themselves to issue a start command during the next interval, as soon as an indication is provided.

One difficulty that arises when using a frame sequence as the timing reference signal is that the handsets 10, 12 may not use the same cellular network, or that the handsets may not be connected to the same base station. In this case, neither the frames nor the frame numbers received by the handsets 10, 12 are aligned, and thus playback cannot be synchronised using the frame sequence.

To overcome this problem, the handsets 10 can be forced to receive an alternative timing reference signal, such as a BCCH (Broadcast Control Channel) time base from a base station of a GSM cellular system, and synchronise the commencement of playback with this signal. Thus, an ARFCN (Absolute Radio Frequency Channel Number) can be selected for use by the handsets 10, 12 to provide the timing reference signal. There are a number of ways in which this can be accomplished. For example, the ARFCN used by one of the handsets 10, 12 could be chosen and its identity communicated to the other handset 10, 12 by SMS, Bluetooth® or any other convenient means, with the other handset 10, 12 then establishing a connection with the chosen ARFCN. Alternatively, the handsets 10, 12 could display a list or graphical representation of available ARFCNs, from which users of the handsets 10, 12 could select a common ARFCN to use.

In this example, only two handsets 10, 12 are shown, but it will be appreciated that the same principles can be applied to a system which uses any number of mobile telephone handsets or other devices.

Similarly, although this example relates to playback of video files, it will be understood that the method described above is equally suited to other types of media. For example, each handset 10, 12 may be loaded with a sound file containing a different part of a song or tune. Thus, handset 10 may be loaded with a sound file containing a bass line of a song, whilst the sound file loaded on handset 12 may contain the melody of the same song. Synchronised playback of these two separate sound files as described above causes a richer version of the song to be heard by users of the handsets 10, 12.

The method of the present invention can also be used to synchronise recording of media. For example, a user may wish to record video footage of a friend, with the friend providing an audio commentary. To ensure that the audio commentary can be synchronised to the video footage, the method of the present invention can be used to commence recording of the video footage and the audio commentary simultaneously. Thus, the user may have a first handset which is equipped with a digital camera capable of recording video footage and the friend may have a second handset which is capable of recording audio. The user and the friend issue start commands to their respective handsets as described above, such that at the next available commencement point, the first handset commences recording video footage and the second handset commences recording audio. The video footage and audio commentary can subsequently be combined, with the video footage and audio commentary being synchronised.

In the examples described above, a frame sequence has been used to provide a timing reference signal, but it will be appreciated that any suitable external timing reference signal could be used instead. For example, many mobile telephone handsets are equipped with a GPS receiver, and the clock component of the GPS signal could be used on suitably-equipped devices as a timing reference signal. In some regions, an atomic clock time signal is broadcast, and this signal could be used as a timing reference signal. However, the use of a TDMA frame sequence as a timing reference signal enables the method of the present invention to be implemented on devices such as mobile telephones without adding significantly to manufacturing costs.

It will be appreciated that the method of the present invention can be implemented in a variety of different ways. For example, the method may be implemented as a computer program configured to cause a processor of a mobile telephone 10, 12 to carry out the method. Alternatively, the method may be carried out in hardware, or using an application specific integrated circuit (ASIC) or a suitably programmed microprocessor.

## Claims

1. A method of synchronising commencement of a media operation on a first device (10, 12) with commencement of a media operation on at least one other device (10, 12), the method comprising:
receiving, at the first device (10, 12) and the at least one other device (10, 12), a common timing reference signal from a serving base station, wherein the common timing reference signal provides a plurality of commencement points, (34, 46, 48, 50);
issuing a first start command on the first device (10, 12) prior to issuing a second start command on the at least one other device (10, 12), wherein the first start command is issued from a user of the first device (10, 12) and the second start command is issued from a user of the at least one other device (10, 12);
commencing the media operation on the devices (10, 12) at a common commencement point (34, 46, 48, 50) after the second start command has been received by the at least one other device (10, 12).

2. A method according to claim 1 wherein the common timing reference signal comprises a frame sequence of a cellular telecommunications system.

3. A method according to claim 1 or claim 2 further comprising providing an indication of the common timing reference signal on the first device.

4. A method according to claim 3 wherein the indication comprises a visual indication.

5. A method according to claim 4 wherein the visual indication comprises changing the colour of an LED of the device in synchronisation with the common timing reference signal.

6. A method according to claim 4 or claim 5 wherein the visual indication comprises changing a display of the device in synchronisation with the common timing reference signal.

7. A method according to claim 3 wherein the indication comprises an audible indication.

8. A method according to any of the preceding claims wherein the media operation comprises playing a media file.

9. A method according to any one of claims 1 to 7 wherein the media operation comprises making a recording.

10. A system for performing a media operation, the system comprising:
means for receiving, at a first device (10, 12) and at least one other device (10, 12), a common timing reference signal from a serving base station, wherein the common timing reference signal provides a plurality of commencement points (34, 36, 48, 50);
means for issuing a first start command on the first device (10, 12) prior to issuing a second start command on the at least one other device (10, 12), wherein the first start command is issued from a user of the first device (10, 12) and the second start command is issued from a user of the at least one other device (10, 12); and
means for commencing the media operation on the devices (10, 12) at a common commencement point (34, 46, 48, 50) after the second start command has been received by the at least one other device (10, 12).

11. A program for causing processing means to carry out the method of any one of claims 1 to 9.

## Patentansprüche

1. Verfahren für das Synchronisieren eines Medienvorgangs auf einem ersten Gerät (10, 12) mit dem Beginn eines Medienvorgangs auf mindestens einem anderen Gerät (10, 12), das Verfahren umfassend:
Empfangen, am ersten Gerät (10, 12) und dem mindestens einen anderen Gerät (10, 12), eines gemeinsamen Zeitreferenzsignals von einer bedienenden Basisstation, wobei das gemeinsame Zeitreferenzsignal eine Vielzahl von Anfangspunkten, (34, 46, 48, 50), bereitstellt;
Ausgeben eines ersten Startbefehls auf dem ersten Gerät (10, 12) vor dem Ausgeben eines zweiten Startbefehls auf dem mindestens einen anderen Gerät (10, 12), wobei der erste Startbefehl von einem Benutzer des ersten Geräts (10, 12) ausgegeben wird und der zweite Startbefehl von einem Benutzer des mindestens einen anderen Geräts (10, 12) ausgegeben wird;
Beginnen des Medienvorgangs auf den Geräten (10, 12) bei einem gemeinsamen Anfangspunkt (34, 46, 48, 50), nachdem der zweite Startbefehl von dem mindestens einen anderen Gerät (10, 12) empfangen wurde.

2. Verfahren nach Anspruch 1, wobei das gemeinsame Zeitreferenzsignal eine Einzelbildfolge eines Mobilfunk-Telekommunikationssystems umfasst.

3. Verfahren nach Anspruch 1 oder 2, ferner umfassend das Bereitstellen einer Angabe des gemeinsamen Zeitreferenzsignals auf dem ersten Gerät.

4. Verfahren nach Anspruch 3, wobei die Angabe eine visuelle Angabe umfasst.

5. Verfahren nach Anspruch 4, wobei die visuelle Angabe das Ändern der Farbe einer LED des Geräts in Synchronisation mit dem gemeinsamen Zeitreferenzsignal umfasst.

6. Verfahren nach Anspruch 4 oder 5, wobei die visuelle Angabe das Ändern des Geräts in Synchronisation mit dem gemeinsamen Zeitreferenzsignal umfasst.

7. Verfahren nach Anspruch 3, wobei die Angabe eine akustische Angabe umfasst.

8. Verfahren nach einem der vorstehenden Ansprüche, wobei der Medienvorgang das Wiedergeben einer Mediendatei umfasst.

9. Verfahren nach einem der Ansprüche 1 bis 7, wobei der Medienvorgang das Erstellen einer Aufzeichnung umfasst.

10. System für das Durchführen eines Medienvorgangs, das System umfassend:
Mittel für das Empfangen, an einem ersten Gerät (10, 12) und mindestens einem anderen Gerät (10, 12), eines gemeinsamen Zeitreferenzsignals von einer bedienenden Basisstation, wobei das gemeinsame Zeitreferenzsignal eine Vielzahl von Anfangspunkten, (34, 36, 48, 50), bereitstellt;
Mittel für das Ausgeben eines ersten Startbefehls auf dem ersten Gerät (10, 12) vor dem Ausgeben eines zweiten Startbefehls auf dem mindestens einen anderen Gerät (10, 12), wobei der erste Startbefehl von einem Benutzer des ersten Geräts (10, 12) ausgegeben wird und der zweite Startbefehl von einem Benutzer des mindestens einen anderen Geräts (10, 12) ausgegeben wird; und
Mittel für das Beginnen des Medienvorgangs auf den Geräten (10, 12) bei einem gemeinsamen Anfangspunkt (34, 46, 48, 50), nachdem der zweite Startbefehl von dem mindestens einen anderen Gerät (10, 12) empfangen wurde.

11. Programm, das Verarbeitungsmittel veranlasst, das Verfahren nach einem der Ansprüche 1 bis 9 durchzuführen.

## Revendications

1. Procédé pour la synchronisation du commencement d'une exploitation de média sur un premier dispositif (10, 12) avec le commencement d'une exploitation de média sur au moins un autre dispositif (10, 12), le procédé comprenant :
la réception, au niveau du premier dispositif (10, 12) et de l'au moins un autre dispositif (10, 12), d'un signal de référence de synchronisation commun à partir d'une station de base de desserte, où le signal de référence de synchronisation commun fournit une pluralité de points de commencement (34, 46, 48, 50) ;
l'émission d'une première commande de démarrage sur le premier dispositif (10, 12) avant l'émission d'une seconde commande de démarrage sur l'au moins un autre dispositif (10, 12), où la première commande de démarrage est émise par un utilisateur du premier dispositif (10, 12) et la seconde commande de démarrage est émise par un utilisateur de l'au moins un autre dispositif (10, 12) ;
le commencement de l'exploitation de média sur les dispositifs (10, 12) à un point de commencement commun (34, 46, 48, 50) après que la seconde commande de démarrage ait été reçue par l'au moins un autre dispositif (10, 12).

2. Procédé selon la revendication 1, dans lequel le signal de référence de synchronisation commun comprend une séquence de trames d'un système de télécommunications cellulaire.

3. Procédé selon la revendication 1 ou la revendication 2, comprenant, en outre, une indication du signal de référence de synchronisation commun sur le premier dispositif.

4. Procédé selon la revendication 3, dans lequel l'indication comprend une indication visuelle.

5. Procédé selon la revendication 4, dans lequel l'indication visuelle comprend le changement de couleur d'une LED sur le dispositif en synchronisation avec le signal de référence de synchronisation commun.

6. Procédé selon la revendication 4 ou la revendication 5, dans lequel l'indication visuelle comprend le changement d'un affichage sur le dispositif en synchronisation avec le signal de référence de synchronisation commun.

7. Procédé selon la revendication 3, dans lequel l'indication comprend une indication sonore.

8. Procédé selon l'une quelconque des revendications précédentes, dans lequel l'exploitation de média comprend la reproduction d'un fichier média.

9. Procédé selon l'une quelconque des revendications 1 à 7, dans lequel l'exploitation de média comprend la réalisation d'un enregistrement.

10. Système pour l'exécution d'une exploitation de média, le système comprenant :
des moyens pour la réception, au niveau d'un premier dispositif (10, 12) et d'au moins un autre dispositif (10, 12), d'un signal de référence de synchronisation commun à partir d'une station de base de desserte, où le signal de référence de synchronisation commun fournit une pluralité de points de commencement (34, 36, 48, 50) ;
des moyens pour l'émission d'une première commande de démarrage sur le premier dispositif (10, 12) avant l'émission d'une seconde commande de démarrage sur l'au moins un autre dispositif (10, 12), où la première commande de démarrage est émise par un utilisateur du premier dispositif (10, 12) et la seconde commande de démarrage est émise par un utilisateur de l'au moins un autre dispositif (10, 12) ; et
des moyens pour le commencement de l'exploitation de média sur les dispositifs (10, 12) à un point de commencement commun (34, 46, 48, 50) après que la seconde commande de démarrage ait été reçue par l'au moins un autre dispositif (10, 12).

11. Programme pour amener des moyens de traitement à exécuter le procédé selon l'une quelconque des revendications 1 à 9.
